(19) Europäisches Patentamt
European Patent Office
Office européen des brevets

(11) Veröffentlichungsnummer: **0 281 837 A2**

(12) **EUROPÄISCHE PATENTANMELDUNG**

(21) Anmeldenummer: **88102671.0**

(22) Anmeldetag: **24.02.88**

(51) Int. Cl.4: **C08L 69/00**, C08L 83/10, C08L 51/00

(30) Priorität: **07.03.87 DE 3707360**

(43) Veröffentlichungstag der Anmeldung: **14.09.88 Patentblatt 88/37**

(84) Benannte Vertragsstaaten: **DE FR GB IT NL**

(71) Anmelder: **BAYER AG
Konzernverwaltung RP Patentabteilung
D-5090 Leverkusen 1 Bayerwerk(DE)**

(72) Erfinder: **Kress, Hans-Jürgen, Dr. c/o Mobay Corporation
Plastics and Rubber Div., Build. 8 Mobay Road
Pittsburgh, PA 15205(US)**
Erfinder: **Wittmann, Dieter, Dr.
Doerperhofstrasse 15
D-4150 Krefeld(DE)**
Erfinder: **Quiring, Bernd, Dr.
Albrecht-Haushofer-Strasse 2
D-5090 Leverkusen(DE)**
Erfinder: **Peters, Horst, Dr.
Winterberg 25
D-5090 Leverkusen 3(DE)**
Erfinder: **Schoeps, Jochen, Dr.
Windmühlenstrasse 126
D-4150 Krefeld(DE)**

(54) **Thermoplastische Formmassen.**

(57) Thermoplastische Formmassen, enthaltend

A. 10 - 98 Gew.-Teile, vorzugsweise 10 - 95 Gew.-Teile eines oder mehrerer thermoplastischer aromatischer Polycarbonate,

B. 2 - 60 Gew.-Teile, vorzugsweise 5 - 60 Gew.-Teile eines oder mehrerer Pfropfpolymerisate aus:

B.1 5 - 90 Gew.-Teile, vorzugsweise 30 - 80 Gew.-Teile einer Mischung aus

B.1.1 50 - 95 Gew.-Teilen Styrol, α-Methylstyrol, kernsubstituiertem Styrol, Methylmethacrylat oder Mischungen daraus, und

B.1.2 50 - 5 Gew.-Teilen Acrylnitril, Methacrylnitril, Methylmethacrylat, Maleinsäureanhydrid, N-substituiertem Maleinimid oder Mischungen daraus, auf

B.2 95 - 10 Gew.-Teile, vorzugsweise 70 - 20 Gew.-Teile eines Kautschuks mit einer Glastemperatur $T_G \leq 10°C$,

C. 0 - 80 Gew.-Teile eines thermoplastischen Copolymerisates aus:

C.1 50 - 95 Gew.-Teilen Styrol, α-Methylstyrol, kernsubstituiertem Styrol, Methylmethacrylat oder Mischungen daraus, und

C.2 50 - 5 Gew.-Teilen Acrylnitril, Methacrylnitril, Methylmethacrylat, Maleinsäureanhydrid, N-substituiertem Maleinimid oder Mischungen daraus, wobei die Summe der Gew.-Teile aus A.+B.+C. jeweils 100 Gew.-Teile beträgt, und

EP 0 281 837 A2

D. 0,5 - 10 Gew.-Teile, vorzugsweise 1,0 - 5,0 Gew.-Teile, bezogen auf 100 Gew.-Teile des Gemisches aus A. + B. + C. eines hydroxylendgruppenhaltigen aliphatischen Polycarbonats.

## Thermoplastische Formmassen

Gegenstand der vorliegenden Erfindung sind thermoplastische Formmassen, enthaltend

A. 10 - 98 Gew.-Teile, vorzugsweise 10 - 95 Gew.-Teile eines oder mehrerer thermoplastischer aromatischer Polycarbonate,

B. 2 - 60 Gew.-Teile, vorzugsweise 5 - 60 Gew.-Teile eines oder mehrerer Pfropfpolymerisate aus:

B.1 5 - 90 Gew.-Teile, vorzugsweise 30 - 80 Gew.-Teile einer Mischung aus

B.1.1 50 - 95 Gew.-Teilen Styrol, α-Methylstyrol, kernsubstituiertem Styrol, Methylmethacrylat oder Mischungen daraus, und

B.1.2 50 - 5 Gew.-Teilen Acrylnitril, Methacrylnitril, Methylmethacrylat, Maleinsäureanhydrid, N-substituiertem Maleinimid oder Mischungen daraus, auf

B.2 95 - 10 Gew.-Teile, vorzugsweise 70 - 20 Gew.-Teile eines Kautschuks mit einer Glastemperatur $T_G \leq 10°C$,

C. 0 - 80 Gew.-Teile eines thermoplastischen Copolymerisates aus:

C.1 50 - 95 Gew.-Teilen Styrol, α-Methylstyrol, kernsubstituiertem Styrol, Methylmethacrylat oder Mischungen daraus, und

C.2 50 - 5 Gew.-Teilen Acrylnitril, Methacrylnitril, Methylmethacrylat, Maleinsäureanhydrid, N-substituiertem Maleinimid oder Mischungen daraus, wobei die Summe der Gew.-Teile aus A. + B. + C. jeweils 100 Gew.-Teile beträgt, und

D. 0,5 - 10 Gew.-Teile, vorzugsweise 1,0 - 5,0 Gew.-Teile, bezogen auf 100 Gew.-Teile des Gemisches aus A. + B. + C. eines hydroxylendgruppenhaltigen aliphatischen Polycarbonats, das hauptsächlich aus den Diolen der Formeln

1. HO - R - OH

mit R = geradkettigen oder verzweigten $C_1$-$C_{20}$-Alkylen oder gegebenenfalls substituierten $C_6$-$C_{20}$-Cycloalkylen,

und/oder

2. $HO - (CH_2 - \overset{R''}{\overset{|}{C}}H - O)_nH$

mit n = 1 - 4 und R″ = H, $CH_3$

und/oder

3. HO - R′ -S - R′ -OH

mit R′ = $C_1$-$C_6$-Alkylen

aufgebaut ist und ein mittleres Molekulargewicht ( $\overline{M}_n$) von 400 bis 10.000, vorzugsweise 600 bis 6.000 besitzt.

Thermoplastische Formmassen aus Polycarbonaten, Pfropfpolymerisaten und gegebenenfalls Copolymerisaten sind seit langem bekannt, wobei das Problem der Zusammenfließnahtfestigkeit eine große Rolle spielt (vgl. DE-OS 2 259 565).

Aus der EP-A 0 080 767 sind ferner Mischungen aus Polycarbonaten, Copolymerisaten und zwei veschiedenen Pfropfpolymerisaten bekannt, denen gute Fließeigenschaften in Kombination mit guter Zähigkeit, Härte, Steifigkeit und gute Werte im Kugelfalltest zugesprochen werden.

Für die Herstellung von großformatigen oder komplizierten Teilen durch Spritzguß, z.B. Computergehäusen, Kfz-Teilen oder Bauplatten, reicht jedoch auch die Fließfähigkeit dieser Materialien nicht aus. Das vollständige und rasche Ausfüllen der Spritzform ist in solchen Fällen noch verbesserungsbedürftig.

Es hat sich nun gezeigt, daß durch Zusatz kleiner Mengen der oben definierten aliphatischen Polycarbonate D. Polycarbonatformmassen erhalten werden, die bessere Fließfähigkeit und bessere Verarbeitbarkeit besitzen, ohne daß andere Eigenschaften wie Zähigkeit oder Fließnahtfestigkeit verschlechtert werden.

Erfindungsgemäß geeignete, thermoplastische aromatische Polycarbonate A. sind solche Diphenolen der Formel (I)

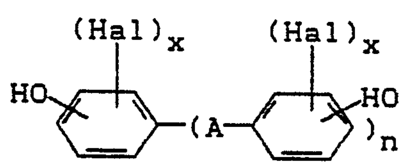

(I)

worin
A eine Einfachbindung, $C_1$-$C_5$-Alkylen, $C_2$-$C_5$-Alkyliden, ein $C_5$-$C_6$-Cycloalkyliden, -S-oder -$SO_2$-;
Hal Chlor oder Brom,
x 0, 1 oder 2 und
n 1 oder 0
sind und gegebenenfalls zusätzlich der Formel (Ia)

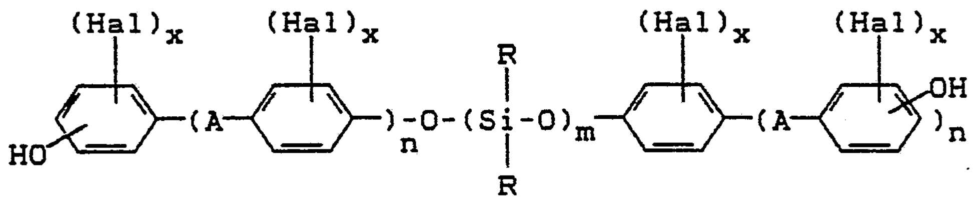

(Ia)

worin
A, Hal, x und n die für Formel (I) genannte Bedeutung haben und die Reste R gleich oder verschieden sind und lineares $C_1$-$C_{20}$-Alkyl, verzweigtes $C_3$-$C_{20}$-Alkyl, $C_6$-$C_{20}$-Aryl, vorzugsweise $CH_3$ entsprechen und m eine ganze Zahl zwischen 5 und 100, vorzugsweise zwischen 20 und 80 ist.

Erfindungsgemäß geeignete Polycarbonate A. sind Homopolycarbonate und Copolycarbonate, wobei die Diphenole der Formel (Ia) nur für die Herstellung von Copolycarbonaten mit den Diphenolen der Formel (I) eingesetzt werden, und zwar in einer Gewichtsmenge von 1 bis 20 Gew.-%, vorzugsweise von 1,5 bis 15 Gew.-% und insbesondere von 2 bis 20 Gew.-%, bezogen auf die Gewichtssumme der eingesetzten Diphenole der Formeln (I) und (Ia).

Erfindungsgemäß geeignete Polycarbonate A. sind auch Mischungen aus einem Copolycarbonat aus den Diphenolen der Formeln (Ia) und (I) und einem anderen siloxanfreien thermoplastischen Polycarbonat, wobei der Gehalt an Diphenolen der Formel (Ia) in der Polycarbonatmischung, bezogen auf die Gesamtsumme an Diphenolen, zwischen 1 bis 20 Gew.-% liegt.

Die Diphenole der Formel (I) sind bekannt oder nach bekannten Verfahren herstellbar; Polydiorganosiloxane mit Hydroxy-aryloxy-Endgruppen gemäß Formel (Ia) sind ebenfalls bekannt (vgl. US-PS 3 419 634) oder nach bekannten Verfahren herstellbar.

Die Herstellung der erfindungsgemäß geeigneten Polycarbonate A. ist bekannt und kann beispielsweise mit Phosgen nach dem Phasengrenzflächenverfahren oder mit Phosgen nach dem Verfahren in homogener Phase ("Pyridinverfahren") erfolgen, wobei das Molekulargewicht durch eine entsprechende Menge an bekannten Kettenabbrechern eingestellt werden kann (bezüglich polydiorganosiloxanhaltiger Polycarbonate vgl. DE-OS 3 334 872).

Geeignete Kettenabbrecher sind beispielsweise Phenol, p-Chlorphenol, p-tert.-Butylphenol, 2,4,6-Tribromphenol, langkettige Alkylphenole, wie 4-(1,3-Tetramethylbutyl)-phenol (DE-OS 2 842 005), Monoalkylphenole und Dialkylphenole mit insgesamt 8 bis 20 C-Atomen in den Alkylsubstituenten wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol (DE-OS 3 506 472).

Die erfindungsgemäß geeigneten Polycarbonate A. haben mittlere Gewichtsmittelmolekulargewichte ($\overline{M}_w$, gemessen durch Ultrazentrifugation oder Streulichtmessung) von 10.000 bis 200.000, vorzugsweise von 20.000 bis 80.000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-bis-(4-hydroxyphenyl)-cyclohexan.

Besonders geeignete Diphenole der Formel (Ia) sind solche, in denen R' Methyl, Ethyl, Propyl, n-Butyl, tert.-Butyl oder Phenyl ist, insbesondere solche der Formel (Ib):

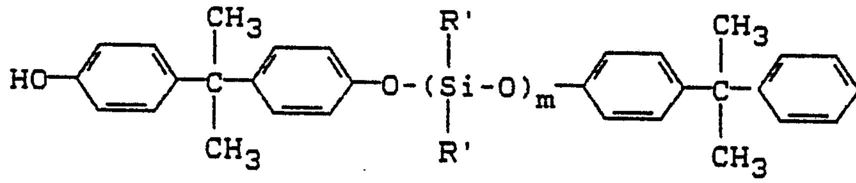
(Ib)

worin die Reste R′ gleich sind und die vorstehend genannte Bedeutung haben, und m eine ganze Zahl von 5 bis 100, vorzugsweise von 20 bis 80 ist.

Die Diphenole der Formel (Ia) können beispielsweise aus den entsprechenden Bis-Chlorverbindungen der Formel (II)

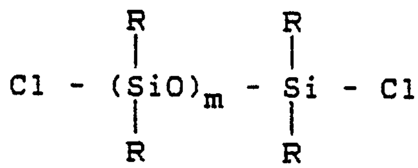
(II)

und den Diphenolen (I) beispielsweise gemäß US-Patent 3 419 635, Spalte 3, in Kombination mit US-Patent 3 189 662 hergestellt werden.

In den Bis-Chlorverbindungen (II) haben R und m die Bedeutung wie in den Diphenolen (Ia) bzw. (Ib).

Die erfindungsgemäß geeigneten Polycarbonate A. können in bekannter Weise verzweigt sein, und zwar vorzugsweise durch den Einbau von 0,05 bis 2,0 Mol-%, bezogen auf die Summe der eingesetzten Diphenole, an drei-oder mehr als dreifunktionellen Verbindungen, beispielsweise solchen mit drei oder mehr als drei phenolischen Gruppen.

Bevorzugte Polycarbonate sind neben dem Bisphenol A-Homopolycarbonat die Copolycarbonate von Bisphenol A mit bis zu 15 Mol-%, bezogen auf die Molsumme an Diphenolen, an 2,2-Bis-(3,5-dibrom-4-hydroxyphenyl)-propan und die Copolycarbonate der Diphenole der Formel (I) mit 1 bis 20 Gew.-% an Diphenolen der Formel (Ia), vorzugsweise der Formel (Ib), bezogen jeweils auf die Gewichtssumme der Diphenole (I) und (Ia) zw. (I) und (Ib).

Zur Herstellung der Pfropfpolymerisate B. geeignete Kautschuke sind insbesondere Polybutadien, Butadien/Styrol-Copolymerisate mit bis zu 30 Gew.-%, bezogen auf Kautschuk, eines niederen Alkylesters der Acryl-oder Methacrylsäure (beispielsweise Methylmethacrylat, Ethylacrylat, Methylacrylat oder Ethylmethacrylat), Polyisopren, Polychloropren, Alkylacrylatkautschuke auf der Basis von $C_1$-$C_8$-Alkylacrylaten, insbesondere Ethyl-, Butyl-, Ethylhexylacrylat. Die Alkylacrylatkautschuke können gegebenenfalls bis zu 30 Gew.-%, bezogen auf Kautschuk, Monomere wie Vinylacetat, Acrylnitril, Styrol, Methylmethacrylat und/oder Vinylether copolymerisiert enthalten. Sie können kleinere Mengen, vorzugsweise bis zu 5 Gew.-%, bezogen auf Kautschuk, vernetzend wirkender ethylenisch ungesättigter Monomeren einpolymerisiert enthalten. Solche Vernetzer sind z.B. Alkylendiol-di(meth)-acrylate, Polyesterdi-(meth)-acrylate, Divinylbenzol, Trivinylbenzol, Triallylcyanurat, Allyl-(meth)-acrylat, Butadien und Isopren. Geeignete Acrylatkautschuke sind auch Produkte, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und einen Acrylatkautschukmantel enthalten. Andere geeignete Kautschuke sind z.B. EPDM-Kautschuke, also Kautschuke aus Ethylen, Propylen und einem unkonjugierten Dienmonomer.

Bevorzugte Kautschuke zur Herstellung der Pfropfpolymerisate B. sind Dien-und Alkylacrylatkautschuke.

Die Kautschuke liegen im Pfropfpolymerisat B. in Form wenigstens partiell vernetzter Teilchen eines mittleren Durchmessers von 0,09 bis 5 µm, insbesondere 0,1 bis 1 µm vor. Die Pfropfpolymerisate B. können durch radikalische Pfropfpolymerisation der eingangs definierten Monomerengemische B.1 in Gegenwart der zu pfropfenden Kautschuke B.2 hergestellt werden. Bevorzugte Herstellungsverfahren für die Pfropfpolymerisate B. sind Emulsions-, Lösungs-, Masse-oder Suspensionspolymeri sation. Besonders bevorzugte Pfropfpolymerisate B. sind ABS-Pfropfpolymerisate. Als kernsubstituierte Styrole seien Halogenstyrole und p-Methylstyrol erwähnt.

Bevorzugte Copolymerisate C. sind solche aus wenigstens einem der Monomeren Styrol, α-Methylstyrol, kernsubstituiertem Styrol gemäß C.1 mit wenigstens einem der Monomeren Acrylnitril, Methacrylnitril, Methylmethacrylat, Maleinsäureanhydrid, N-subst.-Maleinimid gemäß C.2.

Copolymerisate C. entstehen häufig bei der Pfropfpolymerisation zur Herstellung der Komponente B.

als Nebenprodukte, besonders dann, wenn große Mengen Monomere auf kleine Mengen Kautschuk gepfropft werden.

Die erfindungsgemäß einzusetzende Menge an Copolymerisat C. von 0 bis 80 Gew.-Teilen, bezogen auf 100 Gew.-Teile des Gemischs aus A. + B. + C., bezieht diese Nebenprodukte der Pfropfpolymerisation nicht mit ein.

Die Copolymerisate C. sind harzartig, thermoplastisch und kautschukfrei. Besonders bevorzugte Copolymerisate C. sind solche aus Styrol und/oder α-Methylstyrol mit Acrylnitril und gegebenenfalls mit Methylmethacrylat.

Besonders bevorzugte Gewichtsverhältnisse im thermoplastischen Copolymerisat C. sind 60 bis 80 Gew.-% C.1 und 40 bis 20 Gew.-% C.2.

Die Copolymerisate C. können durch radikalische Polymerisation, insbesondere durch Emulsions-, Suspensions-, Lösungs-oder Massepolymerisation hergestellt werden. Sie besitzen vorzugsweise Molekulargewichte $\overline{M}_w$ (Gewichtsmittel, ermittelt durch Lichtstreuung oder Sedimentation) von 15.000 bis 200.000.

Die Hydroxylgruppen aufweisende Polycarbonate D. können z.B. durch Umetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden (DE-AS 1 694 080, 1 915 908 und 2 221 751; DE-OS 2 605 024).

Sie besitzen ein mittleres Molekulargewicht ( $\overline{M}_n$) von 400 bis 10.000, vorzugsweise von 600 bis 6.000, bestimmt durch Endgruppenanalyse (Umsetzung des Produktes mit Acetanhydrid und Rücktitration des nicht verbrauchten Acetanhydrids, wobei die Restmengen an freien Carboxylgruppen durch Titration mit KOH bestimmt und von dem Wert, der bei der Bestimmung mit Acetanhydrid anfällt, abgezogen wird).

Die erfindungsgemäßen Formmassen können weitere für Polycarbonate oder Pfropfpolymerisate und Copolymerisate bekannte Zusätze, wie Stabilisatoren, Pigmente, Entformungsmittel, Flammschutzmittel und/oder Antistatika, in den üblichen Mengen enthalten.

Die erfindungsgemäßen Formmassen, enthaltend die Komponenten A., B., C. und D. und gegebenenfalls weitere Zusätze können hergestellt werden, indem man ihre Bestandteile in bekannter Weise vermischt und bei Temperaturen von 200 bis 330°C in üblichen Mischvorrichtungen, wie Innenknetern, Extrudern oder Doppelwellenschnecken, schmelzcompoundiert oder schmelzextrudiert.

Gegenstand der Erfindung ist auch ein Verfahren zur Herstellung von thermoplastischen Formmassen, enthaltend die Komponenten A., B., C. und D. und gegebenenfalls Stabilisatoren, Pigmente, Entformungsmittel, Flammschutzmittel und/oder Antistatika, das dadurch gekennzeichnet ist, daß man die Komponenten in bekannter Weise vermischt und danach bei Temperaturen von 200 bis 330°C in üblichen Mischvorrichtungen schmelzcompoundiert oder schmelzextrudiert.

Die Komponenten können in bekannter Weise sowohl sukzessive als auch simultan vermischt werden bei etwa 20°C (Raumtemperatur) und auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte, wie Saftpressen, Kaffeemaschinen, Mixer) oder Abdeckplatten für Bauten und Teile für Kraftfahrzeuge. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengrößen bedeutet immer mittlere Teilchendurchmesser $d_{50}$, ermittelt durch Ultrazentrifugenmessungen nach W. Scholten et al., Kolloid-Z. u. Z. polymere 250 (1972), 782-796.

## Beispiele

Eingesetzte Polykondensate und Polymerisate

A. Lineares Polycarbonat auf Basis Bisphenol A mit einer relativen Lösungsviskosität $\eta_{rel}$ von 1,26 bis 1,28, gemessen in $CH_2Cl_2$ bei 25°C und in einer Konzentration von 0,5 g/100 ml.

B.1 SAN-Pfropfpolymerisat von 50 Gew.-% Styrol/Acrylnitril-Gemisch (im Gewichtsverhältnis von 72:28) auf 50 Gew.-% teilchenförmiges Polybutadien mit einem mittleren Teilchendurchmesser ($d_{50}$) von 0,4 µm erhalten durch Emulsionspolymerisation.

B.2 SAN-Pfropfpolymerisat von 25 Gew.-% Styrol/Acrylnitril-Gemisch (im Gewichtsverhältnis von 72:28) auf 75 Gew.-% teilchenförmiges Polybutadien mit einer mittleren Teilchengröße ($d_{50}$) von 0,4 µm, erhalten durch Emulsionspolymerisation.

C. Styrol/Acrylnitril-Copolymerisat mit einem Styrol/Acrylnitril-Verhältnis von 72:28 und einer Grenzviskosität von [η] = 0,55 dl/g (Messung in Dimethylformamid bei 20°C).

D. Hydroxylengruppen-haltiges Hexandiolpolycarbonat mit einem Molekulargewicht $\overline{M}_n$ von ca. 2000.

Die Komponenten A., B., C. und D wurden in einem 3-1-Innenkneter bei 200 bis 220°C compoundiert.

Die Formkörper wurden, soweit nicht anders angegeben, mit einer Spritzgußmaschine bei 260°C hergestellt.

Die Kerbschlagzähigkeit nach Izod wurde an Stäben der Abmessung 2,5 x 1/2 x 1/8" gemäß ASTM-D-256 bei Zimmertemperatur, -20°C und -40°C bestimmt.

Die Fließnahtfestigkeit wurde nach der DuPont Impact Strength-Methode bestimmt, bei der eine Rundplatte von 50 mm Durchmesser und 3 mm Dicke als Prüfkörper benutzt wurde. Die Rundplatte wurde aus einer quadratischen Platte mit 60 mm Kantenlänge und 3 mm Dicke, die durch Spritzguß mit 2fachem Anguß, einseitig, parallel, hergestellt wurde, geschnitten.

Eine Stahlkugel mit dem Radius 6,35 cm bzw. 2,54 cm wird auf das Zentrum der Prüfplatte gesetzt. Ein Stahlgewicht fällt danach auf die Kugel. Bestimmt wird die maximale Energie, bei der an der Fließnaht kein Bruch auftritt.

Die Fließfähigkeit wird beurteilt über den bei der verwendeten Spritzgußmaschine (Massetemperatur: 260°C) notwendigen Fülldruck (s. Johannaber, Kunststoffe 74 (1984, 1; Seiten 1-5) zur Herstellung von Stäben der Abmessung 2,5 x 1/2 x 1/8".

Die Zusammensetzung der geprüften Materialien sowie die erhaltenen Daten sind in der folgenden Tabelle aufgeführt:

| A. | B.1 | B.2 | C. | D. | Kerbschlagzähigkeit (J/m) RT | -20° C | -40° C | Fließnahtfestigkeit (kgcm) | Fließfähigkeit (Fülldruck) (bar) |
|---|---|---|---|---|---|---|---|---|---|
| (Gew.-Teile) | | | | | | | | | |
| erfindungsgemäßes Beispiel | | | | | | | | | |
| 60 | 15 | 15 | 10 | 2 | 668 | 571 | 502 | 386 | 166 |
| Vergleichsbeispiel | | | | | | | | | |
| 60 | 15 | 15 | 10 | | 688 | 576 | 535 | 370 | 195 |
| erfindungsgemäßes Beispiel | | | | | | | | | |
| 45 | 33 | - | 22 | 2 | 471 | - | - | - | 194 |
| Vergleichsbeispiel | | | | | | | | | |
| 45 | 33 | - | 22 | - | 510 | - | - | - | 221 |

RT = Zimmertemperatur +20° C

Die Tabelle zeigt, daß durch Einarbeiten der (erfindungsgemäßen) aliphatischen Polycarbonate D. Formmassen mit deutlich verbesserter Fließfähigkeit erhalten werden. Andere Eigenschaften, insbesondere Zähigkeit und Fließnahtfestigkeit, blieben unverändert gut.

## Ansprüche

1. Thermoplastische Formmassen, enthaltend

A. 10 - 98 Gew.-Teile eines oder mehrerer thermoplastischer aromatischer Polycarbonate,

B. 2 - 60 Gew.-Teile eines oder mehrerer Pfropfpolymerisate aus:

B.1 5 - 95 Gew.-Teile einer Mischung aus

B.1.1 50 - 95 Gew.-Teilen Styrol, $\alpha$-Methylstyrol, kernsubstituiertem Styrol, Methylmethacrylat oder Mischungen daraus, und

B.1.2 50 - 5 Gew.-Teilen Acrylnitril, Methacrylnitril, Methylmethacrylat, Maleinsäureanhydrid, N-substituiertem Maleinimid oder Mischungen daraus, auf

B.2 95 - 10 Gew.-Teile eines Kautschuks mit einer Glastemperatur $T_G \leq 10\,°C$,

C. 0 - 80 Gew.-Teile eines thermoplastischen Copolymerisates aus:

C.1 50 - 95 Gew.-Teilen Styrol, $\alpha$-Methylstyrol, kernsubstituiertem Styrol, Methylmethacrylat oder Mischungen daraus, und

C.2 50 - 5 Gew.-Teilen Acrylnitril, Methacrylnitril, Methylmethacrylat, Maleinsäureanhydrid, N-substituiertem Maleinimid oder Mischungen daraus, wobei die Summe der Gew.-Teile aus A. + B. + C. jeweils 100 Gew.-Teile beträgt, und

D. 0,5 - 10 Gew.-Teile, vorzugsweise 1,0 -5,0 Gew.-Teile, bezogen auf 100 Gew.-Teile des Gemisches aus A. + B. + C. eines hydroxylendgruppenhaltigen aliphatischen Polycarbonats, das hauptsächlich aus den Diolen der Formeln

1. $HO - R - OH$

mit R = geradkettigen oder verzweigten $C_1$-$C_{20}$-Alkylen oder gegebenenfalls substituierten $C_6$-$C_{20}$-Cycloalkylen,

2. $HO - (CH_2 - \overset{R''}{\overset{|}{C}}H \; -O)_nH$

mit n = 1 - 4 und R'' = H, $CH_3$

und/oder

3. $HO - R' -S - R' -OH$

mit R' = $C_1$-$C_6$-Alkylen

aufgebaut ist und ein mittleres Molekulargewicht ($\overline{M}_n$) von 400 bis 10.000 besitzt.

2. Formmassen gemäß Anspruch 1, enthaltend die Komponente A in Mengen von 10-95 Gew.-Teilen und die Komponente B in Mengen von 5-60 Gew.-Teilen.

3. Formmassen gemäß Anspruch 1 und 2 in denen die Komponente B aus 30-80 Gew.-Teilen B.1 und 70-20 Gew.-Teilen B.2. besteht.

4. Formmassen gemäß Anspruch 1-3, enthaltend die Komponente D. in Mengen von 1,0 bis 5 Gew.-Teilen, bezogen auf 100 Gew.-Teile der Summe A. + B. + C.

5. Formmassen gemäß Anspruch 1-4, worin die Komponente A. ein Polydiorganosiloxanpolycarbonat-Blockcopolymer ist, wobei der Gewichtsanteil an Siloxangruppen enthaltendem Diphenol 1 bis 20 Gew.-%, bezogen auf die gesamten Diphenole ist.

6. Formmassen gemäß Anspruch 1-5, enthaltend Stabilisatoren, Pigmente, Entformungsmittel, Flammschutzmittel und/oder Antistatika.

7. Verfahren zur Herstellung der Formmassen nach Anspruch 1-5, dadurch gekennzeichnet, daß man die Komponenten A., B., C. und D. vermischt und danach bei Temperaturen von 200 bis 330 °C in üblichen Mischaggregaten schmelzcompoundiert oder schmelzextrudiert.